Europäisches Patentamt

European Patent Office

Office européen des brevets

(11) Veröffentlichungsnummer: **0 354 430 B1**

## EUROPÄISCHE PATENTSCHRIFT

(45) Veröffentlichungstag der Patentschrift: **11.05.94**

(51) Int. Cl.5: **H02M 7/48**, H02M 5/45

(21) Anmeldenummer: **89114018.8**

(22) Anmeldetag: **28.07.89**

(54) **Umrichter aus parallelen Teilumrichtern mit Gleichstromkreis.**

(30) Priorität: **12.08.88 DE 8810279 U**

(43) Veröffentlichungstag der Anmeldung:
**14.02.90 Patentblatt 90/07**

(45) Bekanntmachung des Hinweises auf die
Patenterteilung:
**11.05.94 Patentblatt 94/19**

(84) Benannte Vertragsstaaten:
**AT CH DE FR GB IT LI SE**

(56) Entgegenhaltungen:
**EP-A- 0 107 539**

**PATENT ABSTRACTS OF JAPAN (E-33), Vol. 4, No. 162, 12 November 1980**

(73) Patentinhaber: **SIEMENS AKTIENGESELL-SCHAFT**
**Wittelsbacherplatz 2**
**D-80333 München(DE)**

(72) Erfinder: **Hamann, Jens, Dr.**
**Steinacher Strasse 22A**
**D-8510 Fürth Stadeln(DE)**
Erfinder: **Neeser, Gerhard, Dipl.-Ing.**
**Kapellenweg 17**
**D-8524 Neunkirchen/am Brand(DE)**

## Beschreibung

Die Erfindung betrifft einen Umrichter aus mindestens zwei parallelen, galvanisch getrennten Teilumrichtern mit Gleichstromzwischenkreis und Drosseln im Zwischenkreis.

Die Parallelschaltung von aus bekannten Stromrichtergrundschaltungen bestehenden, identischen Teilumrichtern kann zum einen dazu verwendet werden, die maximal abgebbare elektrische Leistung zu erhöhen. Eine Parallelschaltung von Teilumrichtern kann desweiteren vorteilhaft dazu verwendet werden, daß bei Betrieb der parallelen Teilumrichter mit unterschiedlichen Schaltungswinkeln aufgrund der separaten Ein- oder Mehrphasensysteme am Ausgang der Umrichter durch Überlagerung der jeweils davon in der Last hervorgerufenen Drehfeldern ein resultierendes Drehfeld mit höherer Pulszahl zu bilden. Da somit zur Bildung der jeweiligen elektrischen Ausgangsgröße pro Zeiteinheit in den parallelen Teilumrichtern phasenversetzt mehr Kommutierungen beitragen, haben derartige Ausgangsgrößen ein zu höheren Frequenzen hin verschobenes Oberschwingungsspektrum und somit eine erheblich geringere Restwelligkeit.

Bei Umrichtern bzw. Teilumrichtern mit einem Gleichstromkreis, insbesondere einem sogenannten Gleichstrom-Zwischenkreis im Schaltungsinneren, sind in der Regel Drosseln zur Einprägung des Stromes im Gleichstromkreis vorhanden. Da die Drosseln aufgrund der Durchflutung mit Gleichstrom vormagnetisiert sind, wirken diese allerdings bei einem insbesondere unkontrolliert ansteigenden Gleichstrom z.B. im Falle eines Kurzschlusses, nur bedingt stromanstiegsbegrenzend, da der Sättigungszustand schnell erreicht ist.

Beim Betrieb von aus parallelen, gleichartigen Teilumrichtern aufgebauten Umrichtern muß besonders darauf geachtet werden, daß im Parallelbetrieb keine nennenswerten Arbeitspunktabweichungen zwischen den Teilumrichtern auftreten. Dies ist insbesondere auch deswegen wichtig, da jeder der Teilumrichter ein separates Ein- oder Mehrphasensystem am Ausgang bereitstellt, welches in der Last wiederum ein eigenes Drehfeld hervorruft. So sollten insbesondere die Istwerte der Gleichströme in den Gleichstromkreisen der Teilumrichter selbst bei Übergangsvorgängen nur bis zu einem maximal zulässigen Wert voneinander abweichen. Insbesondere bei sprungartigen Sollwertänderungen bzw. beim Auftreten eines Fehlers in einem der parallelen Teilumrichter dagegen, z.B. bei einem Kurzschluß aufgrund des Kippens eines Ventils im Wechselrichterteil dieses Teilumrichters, lassen sich gravierende Arbeitspunktabweichungen zwischen den parallelen Teilumrichtern bislang nicht vermeiden. So besteht die Gefahr, daß sich im Gleichstromkreis des gestörten Teilumrichters eine stark anklingenden transiente Kurzschlußstromkuppe ergibt, während die übrigen parallelen Teilumrichter zumindest bis zum Auslösen von mechanischen Überstromschutzelementen versuchen im Normalbetrieb fortzufahren. Dient z.B. ein aus mehreren parallel arbeitenden Teilumrichtern mit Gleichstrom-Zwischenkreis aufgebauter Umrichter im Rahmen des als sogenannter "Stromrichtermotor" bekannten Antriebskonzeptes zum Betrieb einer Synchronmaschine, so belastet ein unsymmetrisch in einem der parallelen Teilumrichter auftretender Kurzschlußstrom die rotierende elektrische Maschine erheblich und führt zu starken Regelabweichungen in den Reglern für die netz- und lastseitigen Stromrichter in den einzelnen Teilumrichtern.

Der Erfindung liegt die Aufgabe zugrunde, einen aus mehreren parallelen Teilumrichtern mit Gleichstromkreis bestehenden Umrichter so auszubilden, daß der Parallelbetrieb der Teilumrichter in jedem Betriebszustand sichergestellt ist.

Die Aufgabe wird gelöst mit den Merkmalen von Anspruch 1. Vorteilhafte Ausführungsformen sind in den Unteransprüchen enthalten.

Aus der JP 55 111 666 A in "Patent Abstracts of Japan", E-33 November 12, 1980 Vol.4/ No.162 ist ein Umrichter bekannt, bei dem zur Bildung eines Dreiphasensystems für eine Last drei Einphasenumrichter mit Gleichstromzwischenkreis und Drosseln im jeweiligen Zwischenkreis dienen. Die Wechselrichter am Ausgang der Einphasenumrichter sind dabei zur Bildung des Drehfeldes für die Last galvanisch miteinander verschaltet. Ferner sind die Drosseln in den einzelnen Gleichstromkreisen zur Erhöhung der Glättungswirkung magnetisch miteinander verkoppelt. Die Verkopplung der Drosseln bewirkt bei einem derartigen Umrichter keine gegenseitige Vorsteuerung der Gleichströme in den Zwischenkreisen der jeweiligen Einphasenumrichtern.

Die Erfindung wird desweiteren anhand der nachfolgend kurz angeführten Figuren näher erläutert. Dabei zeigt:

FIG 1    beispielhaft die Parallelschaltung zweier Teilumrichter in einem Umrichter gemäß der vorliegenden Erfindung beim Betrieb einer Synchronmaschine als Last,

FIG 2    die Parallelschaltung von vier Teilumrichtern in einem Umrichter gemäß der vorliegenden Erfindung,

FIG 3    eine vorteilhafte Ausführungsform der magnetischen Kopplung der Drosseln in den Gleichstromkreisen der vier Teilumrichter von FIG 2 gemäß der vorliegenden Erfindung,

FIG 4    eine weitere vorteilhafte Ausführungsform der Parallelschaltung von zwei Teilumrichtern in einem Umrichter,

FIG 5 beispielhaft die Verläufe der Gleichströme und Gleichstromreglerstellsignale bei einem Kurzschluß im Wechselrichterteil eines aus zwei parallelen Teilumrichtern bestehenden Umrichters,

FIG 6 beispielhaft die Verläufe der Gleichströme und Gleichstromreglerstellsignale bei einem Kurzschluß im Wechselrichterteil von zwei erfindungsgemäß entsprechend der FIG 1 parallelgeschalteten Teilumrichtern in einem Umrichter und

FIG 7 den Verläufen von FIG 6 entsprechende Verläufe bei zusätzlicher Sperre der Gleichstromregler während der Dauer des Fehlers.

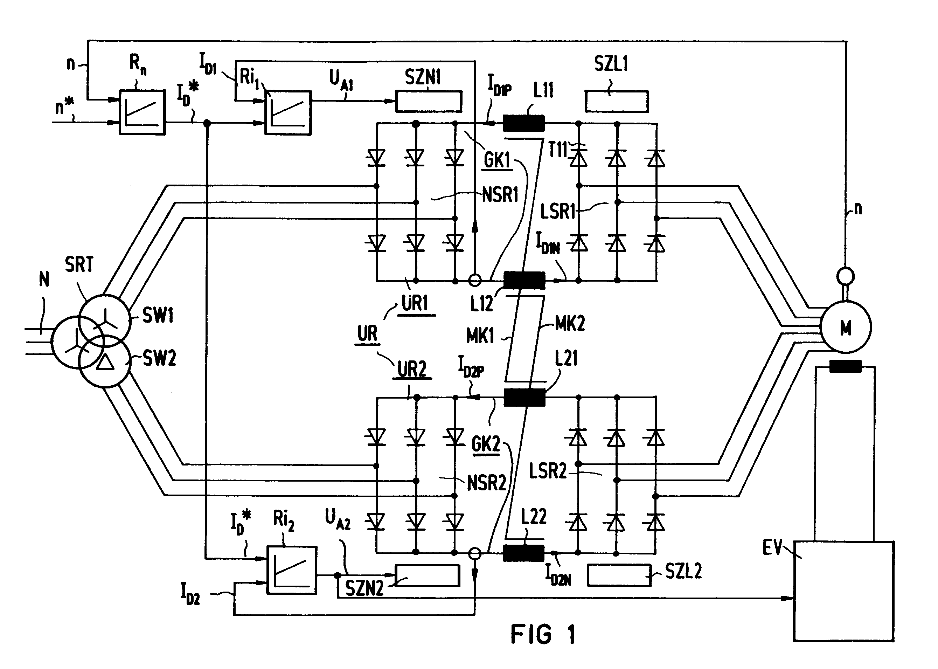

Der in der vorteilhaften Ausführungsform von FIG 1 dargestellte Umrichter UR besteht beispielhaft aus zwei parallelen Teilumrichtern UR1 und UR2. Diese speisen beispielhaft eine als Last dienende rotierende elektrische Maschine, insbesondere eine Synchronmaschine. Ein derartiger Umrichter UR kann auch im Rahmen einer sogenannten Hochspannungs-Gleichstromübertragung ein anderes Netz speisen. Als Stromrichtergrundschaltung für jeden Teilumrichter dient dabei jeweils ein sechspulsiger Umrichter mit Gleichstromzwischenkreis. So ist im Teilumrichter UR1 der netzseitige Stromrichter NSR1 über den Gleichstromkreis GK1 mit dem lastseitigen Stromrichter LSR1 verbunden. In der gleichen Weise verbindet im Teilumrichter UR2 der Gleichstromkreis GK2 den netzseitigen Stromrichter NSR2 mit dem lastseitigen Stromrichter LSR2. Die netzseitigen Stromrichter beider Teilumrichter werden dabei vorteilhaft über einen Stromrichtertransformator SRT mit getrennten Sekundärwicklungen SW1 und SW2 aus einem Netz N gespeist. Zum Einprägen der Gleichströme in den Gleichstromkreisen der Teilumrichter sind jeweils Drosseln vorgesehen. So prägen im Gleichstromkreis GK1 die Drosseln L11 und L12 die Gleichströme $I_{D1P}$ bzw. $I_{D1N}$ ein. Entsprechend dienen im Gleichstromkreis GK2 von Teilumrichter UR2 die Drosseln L21 und L22 zur Einprägung der Ströme $I_{D2P}$ und $I_{D2N}$.

Gemäß der Erfindung werden die Drosseln in den Gleichstromkreisen der beiden parallelen Teilumrichter UR1 und UR2 magnetisch so gekoppelt, daß beispielsweise eine Erhöhung des Gleichstromes $I_{D1P}$ im Gleichstromkreis GK1 von Teilumrichter UR1 mittels Spannungsinduktion eine Erhöhung des Gleichstromes $I_{D2P}$ im Gleichstromkreis GK2 von Teilumrichter UR2 im Sinne einer Vorsteuerung hervorruft. Hierzu dienen erfindungsgemäß im Ausführungsbeispiel der FIG 1 die magnetischen Kopplungen MK1 bzw. MK2 für die Drosseln L11, L21 bzw. L12, L22. Jede der beiden Anordnungen aus den Elementen L11, MK1, L21 bzw. L12, MK2, L22 wirkt wie ein einphasiger Transformator, dessen Primär- und Sekundärseite jeweils von einer mit Gleichstrom dorchflossenen Zwischenkreisdrossel eines jeden der beiden Teilumrichter gebildet wird. Auf diese Weise kann gemäß der vorliegenden Erfindung besonders vorteilhaft der Parallelbetrieb der beiden Teilumrichter UR1 und UR2 im Umrichter UR sichergestellt werden.

Die erfindungsgemäße magnetische Kopplung ist grundsätzlich bei allen Formen von parallelen Teilumrichtern anwendbar, welche am Eingang, am Ausgang bzw. im Schaltungsinneren über einen Gleichstromkreis verfügen. Desweiteren kann der Umrichter aus einer beliebigen, gerad- bzw. ungeradzahligen Anzahl paralleler Teilumrichter aufgebaut sein. Es dient lediglich der besseren Übersicht, wenn die Erfindung des weiteren am Beispiel von Umrichtern erläutert wird, bei denen als Stromrichtergrundschaltung für die parallelen Teilumrichter jeweils sechspulsige Gleichstrom-Zwischenkreisumrichter verwendet sind.

Ist ein Umrichter aus einer geraden Anzahl von parallelen Teilumrichtern aufgebaut, so kann die erfindungsgemäße magnetische Kopplung der Drosseln in den Gleichstromkreisen der einzelnen Teilumrichter besonders vorteilhaft so vorgenommen werden, daß die von den Gleichströmen durch die verkoppelten Drosseln hervorgerufenen magnetischen Gleichflüsse sich in der Kopplung kompensieren. So kann beispielsweise im Umrichter UR in FIG 1 der vom Gleichstrom $I_{D1N}$ in der Drossel L12 hervorgerufene magnetische Gleichfluß in der Kopplung MK2 durch den vom Gleichstrom $I_{D2N}$ in der Drossel L22 hervorgerufener magnetischer Gleichfluß kompensiert werden.

Die erfindungsgemäße magnetische Verkopplung der Drosseln in den Gleichstromkreisen von parallelen Teilumrichtern eines Umrichters ist insbesondere auch dann von Vorteil, wenn die parallelen Teilumrichter untereinander so phasenversetzt getaktet werden, daß die Pulszahl des gesamten Umrichters größer ist als die Pulszahl der einzelnen Teilumrichter. Dies wird desweiteren am Beispiel der Schaltung von FIG 1 näher erläutert. Der dort in Form eines Blockschaltbildes dargestellte Antrieb einer Synchronmaschine wird auch als "Stromrichtermotor" bezeichnet. Dabei dienen zwei parallel auf die Last arbeitende sechspulsige Teilstromrichter UR1 und UR2 zur 12-pulsigen Erzeugung eines Drehstromsystems am Ausgang des Gesamtumrichters UR. Hierzu werden die beiden Teilumrichter zum einen mit zwei um 30° zueinander phasenverschobenen Drehspannungssystemen am Eingang versorgt, welche bevorzugt über je eine im Stern bzw. Dreieck geschaltete Sekundärwicklung SW1 bzw. SW2 des Stromrichtertransformators SRT bereitgeteilt werden. Zum anderen werden insbesondere die als Gleichrichter dienenden netzseitigen Stromrichter NSR1 und NSR2 der beiden Teilumrichter UR1 und UR2 über die jeweiligen Steuersätze SZN1 und SZN2 mit ebenfalls um 30° zueinander phasenversetzten Zündimpulsen getaktet. Die Stellsignale $U_{A1}$ und $U_{A2}$ für diese Steuersätze werden abhängig von den Istwerten der Gleichströme $I_{D1}$ und $I_{D2}$ in den jeweiligen Gleichstromkreisen GK1, GK2 von je einem unterlagerten Gleichstromregler $Ri_1$ bzw. $Ri_2$ gebildet. Der Gleichstromsollwert $I_D^*$ wiederum wird den Gleichstromreglern von einem überlagerten Drehzahlregler Rn zur Verfügung gestellt.

Zur 12-pulsigen Erzeugung eines Drehstromsystems am Ausgang des Umrichters UR werden die Schaltelemente in jedem der Teilumrichtern UR1 und UR2 abhängig von einer vorgegebenen Kommutierungsreihenfolge jeweils alle 60° einer Phase der Netzperiode mit Zündimpulsen versorgt, wobei die Zündimpulse für die Teilumrichter wie oben erläutert untereinander um 30° phasenverschoben sind. Es sei nun angenommen, daß unmittelbar nach Abgabe der Zündimpulse für die Ventile von Teilumrichter UR1 ein kurzschlußstromartiger Anstieg des Gleichstromes $I_{D1P}$ aufgrund einer Kippung des Ventils $T_{11}$ im lastseitigen Stromrichter LSR1 auftritt. Um den weiteren Anstieg des Kurzschlußstromes zu bremsen, geht der Sollwert $I_D^*$ am Ausgang des Drehzahlreglers Rn zurück, um den netzseitigen Stromrichter NSR1 in den Wechselrichterbetrieb umzusteuern. Ein derartiges Umsteuern ist aber erst nach Ablauf der Stromführungsdauer der eben erst gezündeten Ventile möglich, d.h. frühestens nach Ablauf von nahezu weiteren 60° einer Periode der Netzfrequenz. Wird mit Hilfe der Kopplungen MK1 und MK2 nun zunächst eine vorsteuernde Erhöhung der Gleichströme $I_{D2P}$ und $I_{D2N}$ im Gleichstromkreis GK2 gemäß der Erfindung aufgrund des kurzschlußartigen Stromanstieges von $I_{D1P}$ bzw. $I_{D1N}$ hervorgerufen, so kann bereits knapp 30° nach Fehlereintritt aufgrund der nun großen Regelabweichung auch am Eingang des Stromreglers $Ri_2$ der netzseitige Stromrichter NSR2 von Teilumrichter UR2 schlagartig an die Wechselrichtertrittgrenze umgesteuert werden. Hierdurch wird der Gleichstrom $I_{D2P}$ bzw. $I_{D2N}$ stark zurückgenommen, wodurch über die erfindungsgemäßen Kopplungen MK1 bzw. MK2 noch innerhalb der Stromführungsdauer der vor dem Fehlereintritt gezündeten Ventile von Teilumrichter UR1 auch der kurzschlußartige Gleichstrom im Gleichstromkreis GK1 wiederum im Sinne einer Vorsteuerung gebremst wird. Die erfindungsgemäße Kopplung der Spulen bewirkt somit eine erhebliche Verbesserung des Parallelbetriebes der Teilumrichter innerhalb des Umrichters selbst, ohne daß die angeschlossene Last von dem unsymmetrischen Fehler in einem der Teilumrichter wesentlich betroffen wäre und ohne daß die Last durch die von ihr bewirkte ausgangsseitige Verkopplung der Teilumrichter ihrerseits wesentlich zur Parallelisierung der Betriebszustände in den Teilumrichtern beitragen müßte. In sehr ähnlicher Weise bewirkt bei einem Sprung im Sollwert $I_D^*$ für die Gleichströme die Kopplung der Spulen eine Vorsteuerung der Gleichströme in den parallelen Teilumrichtern.

Die erfindungsgemäße magnetische Kopplung der Drosseln in den Gleichstromkreisen von parallelen Teilumrichtern eines Umrichters hat insbesondere dann einen weiteren Vorteil, wenn die Teilumrichter zur Erhöhung der Pulszahl phasenversetzt zueinander getaktet werden. Hierbei erfolgt eine Überlagerung der von den Kommutierungen in den einzelnen Teilumrichtern im Gleichstrom erzeugten Stromoberwelligkeiten mit Hilfe der magnetischen Kopplung bereits im Umrichter selbst. Dies ist insbesondere dann von Vorteil, wenn entsprechend dem Ausführungsbeispiel von FIG 1 die 12-pulsige Überlagerung der Drehstromsysteme am Ausgang der Teilumrichter UR1 und UR2 in der Last selbst stattfindet. Die als Last dienende rotierende elektrische Maschine, insbesondere eine Synchronmaschine, wird in einem solchen Fall zwar separat von den Drehstromsystemen am Ausgang der parallelen Teilumrichter gespeist. Aufgrund der magnetischen Kopplung der beiden Teilumrichter UR1 und UR2 sind diese sechspulsig erzeugten Drehstromsystem lediglich mit einer für die rotierende elektrische Maschine günstigeren 12-pulsigen Stromoberwelligkeit belastet. Auf diese Weise kann besonders vorteilhaft die Elimination von störenden Stromoberschwingungen, insbesondere 5. und 7. Ordnung, bereits außerhalb der Last im Umrichter selbst bewerkstelligt werden.

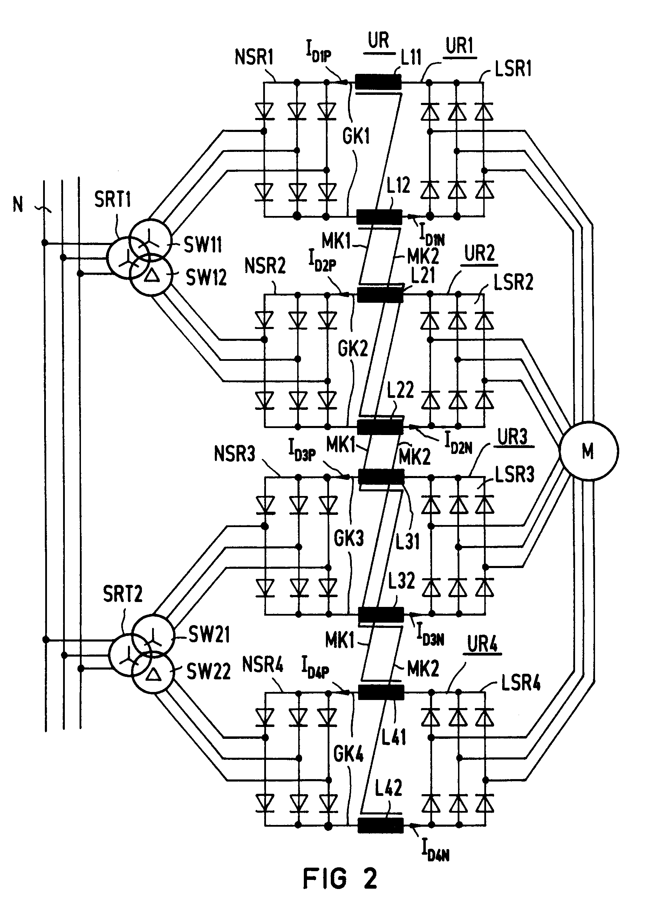

In der FIG 2 ist ein weiteres Ausführungsbeispiel der Erfindung dargestellt. Dabei besteht der Umrichter UR aus vier parallelen, in sechspulsiger Gleichstromzwischenkreis-Grundschaltung aufgebauten Teilumrichtern UR1, UR2, UR3 und UR4. Auch hier dienen zwischen dem netz- und dem lastseitigen Stromrichter eines jeden Teilumrichters Drosseln L11, L12 bzw. L21, L22 bzw. L31, L32 bzw. L41, L42 zur Einprägung der Gleichströme in den Gleichstromkreisen GK1, GK2, GK3 bzw. GK4. Erfindungsgemäß verbinden hier die Kopplungen MK1 bzw. MK2 die Drosseln L11, L21, L31, L41 bzw. L12, L22, L32, L42. Auf diese Weise kann besonders vorteilhaft die Änderungen eines Gleichstromes eines der parallelen Teilumrichter eine entsprechende Änderung der Gleichströme in den Gleichstromkreisen der übrigen parallelen Teilumrichter im Sinne einer Vorsteuerung hervorrufen. Dies ist für den Gleichlauf von parallelen Teilumrichtern in einem Umrichter insbesondere dann von Vorteil, wenn alle Teilumrichter phasengleich getaktet werden und die Parallelschaltung von Teilumrichtern zur Erhöhung des Energietransportes an die von dem so gebildeten Gesamtumrichter gespeiste Last dient.

Wie bereits oben erläutert wurde, ist die erfindungsgemäße magnetische Kopplung der Drosseln auch bei phasenversetzter Taktung der einzelnen parallelen Teilumrichter von besonderem Vorteil. So kann eine Anordnung gemäß der FIG 2 dazu dienen, insbesondere eine als Last dienende rotierende elektrische Maschine 12- bzw. 24-pulsig mit einem Drehstromsystem zu versorgen. Zu diesem Zweck werden jeweils zwei Teilumrichter gemeinsam von einem Stromrichtertransformator gespeist. So speist der Stromrichtertransformator SRT1 über die beiden stern- bzw. dreieckförmig geschalteten Sekundärwicklungen SW11 bzw. SW12 die beiden Teilumrichter UR1 bzw. UR2 mit je einem, um 30° untereinander phasenversetzten Drehstromsystem. Entsprechend speist der Stromrichtertransformator SRT2 über die stern- bzw. dreieckförmig geschalteten Sekundärwicklungen SW21 bzw. SW22 die Teilumrichter UR3 und UR4 mit je einem ebenfalls um 30° zueinander phasenversetzten Drehstromsystem. Bei 12-pulsiger Speisung der Last werden jeweils zwei Teilumrichter paarweise gleichphasig getaktet, wobei die Taktimpulse für die Teilumrichterpaare untereinander um 30° phasenversetzt sind. In der Schaltung von FIG 2 hat dies zur Folge, daß die Teilumrichter UR1 und UR3 jeweils bei einem Phasenwinkel von 0°, und die Teilumrichter UR2 bzw. UR4 jeweils bei einem Phasenwinkel von 30° mit Zündimpulsen versorgt werden. Bei 24-pulsiger Speisung der Last dagegen wird jeder der Teilumrichter relativ zu einer Periode einer Netzphase bei einem anderen Phasenwinkel mit Zündimpulsen versorgt. In einem sol chen Fall würde beispielsweise der Teilumrichter UR1 bei 0°, der Teilumrichter UR3 bei 15°, der Teilumrichter UR2 bei 30° und der Teilumrichter UR4 bei 45° Phasenverschiebung mit Zündimpulsen versorgt werden.

Da der Umrichter UR im Ausführungsbeispiel der FIG 2 wiederum aus einer geraden Anzahl von Teilumrichtern aufgebaut ist, besteht auch hier die Möglichkeit, daß die magnetische Kopplung der einzelnen Drosseln so vorgenommen wird, daß sich die von den Gleichströmen in den jeweiligen Drosseln hervorgerufenen Gleichflüsse in der jeweiligen Kopplung kompensieren.

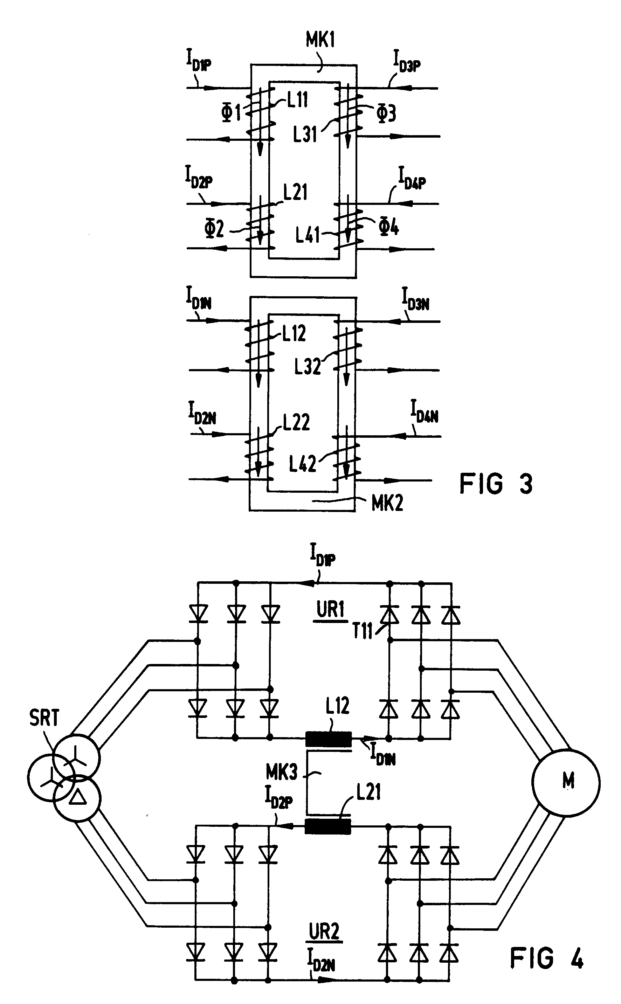

In der FIG 3 ist ein möglicher, vorteilhafter Aufbau einer derartigen Kopplung anhand eines Ersatzschaltbildes dargestellt. Die Drosseln L11, L21, L31 und L41 werden dabei von der Kopplung MK1 magnetisch verbunden und von den entsprechenden Gleichströmen $I_{D1P}...I_{D4P}$ derart durch flossen, daß die Spulen L11, L21 bzw. L31, L41 die Primär- bzw. Sekundärseite eines gleichstromdurchflossenen Transformators bilden. Auf diese Weise wird erreicht, daß die Gleichflüsse Φ 1, Φ 2 der Spulen L11, L21 bzw. Gleichflüsse Φ 3, Φ 4 der Spulen L31, L41 jeweils addiert und alle Gleichflüsse insgesamt kompensiert werden. In der gleichen Weise bilden die Spulen L12, L22 bzw. L32, L42 die Primär- bzw. Sekundärseiten eines weiteren, mittels der Kopplung MK2 gebildeten, gleichstromdurchflossenen Transformators. In einer weiteren möglichen Ausführungsform können die Richtungen der die einzelnen Drosseln durchfließenden Gleichströme auch so gewählt werden, daß die Drosseln L11, L41 bzw. L12, L42 jeweils die Primärseiten und die Drosseln L31, L21 bzw. L32, L22 die Sekundärseiten von mittels der Kopplungen MK1 bzw. MK2 aufgebauten Transformatoren bilden.

In der FIG 4 ist eine weitere vorteilhafte Ausführungsform eines Umrichters gemäß der Erfindung dargestellt. Dabei verfügen die beiden parallelen Teilumrichter UR1 und UR2 jeweils lediglich über eine Drossel L12 bzw. L21 im jeweiligen Gleichstromkreis zur Gleichstromeinprägung, wobei die Drossel L12 in dem vom Gleichstrom $I_{D1N}$ durchflossenen Teil bzw. die Drossel L21 in dem vom Gleichstrom $I_{D2P}$ durchflossenen Teil des jeweiligen Gleichstromkreises angeordnet ist. Auch in diesem Fall ist bei Berücksichtigung der unterschiedlichen Gleichstromdurchflußrichtungen eine magnetische Kopplung MK3 der beiden Drosseln bei gleichzeitiger Kompensation der von den Gleichströmen hervorgerufenen magnetischen Gleichflüsse in der Kopplung möglich.

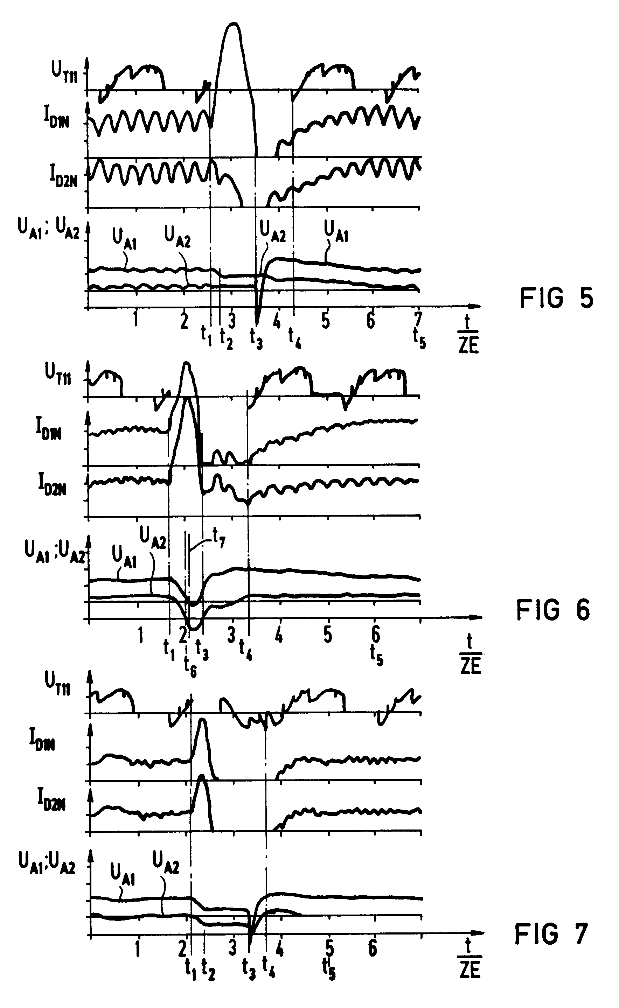

In den FIG 5 bis 7 sind beispielhaft für eine Schaltung gemäß der Ausführungsform von FIG 1 die bei einem vorübergehenden Kippen des Schaltelementes T11 im lastseitigen Umrichter LSR1 von Teilumrichter UR1 auftretenden Verläufe der Gleichströme $I_{D1N}$, $I_{D2N}$ und der Stellsignale $U_{A1}$, $U_{A2}$ am Ausgang der Gleichstromregler $Ri_1$, $Ri_2$ dargestellt. Dabei zeigt die FIG 5 bzw. die FIG 6 und 7 die Verläufe bei einem Umrichter ohne bzw. mit der magnetischen Kopplung der Drosseln in den Gleichstromkreisen sen der Teilumrichter.

Gemäß der FIG 5 wird zunächst angenommen, daß im Zeitpunkt $t_1$ das Ventil T11 "kippt", d.h. nicht mehr in den stromsperrenden Zustand zurückkehrt und somit keine Sperrspannung $U_{T11}$ mehr aufnehmen kann. Man erkennt, daß sich dem Gleichstrom $I_{D1N}$ des gestörten Teilumrichters UR1 eine sehr große, transiente Kurzschlußstromspitze überlagert, während der Strom $I_{D2N}$ im Gleichstromkreis des ungestörten Teilumrichters UR2 aufgrund der Umsteuerung des dazugehörigen netzseitigen Umrichters NSR1 an die Wechselrichter-Trittgrenze bis auf Null abklingt. Dies stellt einen sehr stark unsymmetrischen, vom gewünschten parallelen Betrieb der beiden Teilumrichter abweichenden Betriebszustand dar. Die Höhe der Überstromspitze im Strom $I_{d1N}$ kann in diesem Fall lediglich dadurch begrenzt werden, daß ein Weglaufen bzw. starkes Überschwingen der Stromreglerstellsignale $U_{A1}$, $U_{A2}$ durch Sperren der Stromregler im Zeitpunkt $t_2$ verhindert wird. Dennoch ist bei Fehlerende, d.h. bei Verschwinden des Kurzschlußstromes $I_{D1N}$ und bei Aufhebung der Reglersperre im Zeitpunkt $t_3$ ein starkes Überschwingen im Stellsignal $U_{A1}$ des zu dem ursprünglich gestörten Teilumrichter gehörigen Gleichstromreglers nicht zu vermeiden. Man erkennt, daß alle Übergangsvorgänge erst ca. 3 1/2 Zeiteinheiten ZE nach Ende des Fehlers im Zeitpunkt $t_3$ abgeklungen sind und insbesondere die Gleichströme $I_{D1N}$ und $I_{D2N}$ ihre ursprüngliche Höhe und Form im Zeitpunkt $t_5$ wieder erreicht haben.

Aus den Kurvenverläufen der FIG 6 dagegen ist zu erkennen, daß aufgrund der erfindungsgemäßen magnetischen Kopplung auch bei einem vorübergehenden Kurzschluß in einem der Teilumrichter der Parallelbetrieb beider Teilumrichter während der Fehlerdauer sichergestellt ist. So überlagert sich im Moment des Fehlereintritts im Zeitpunkt $t_1$ den beiden Strömen $I_{D1N}$ und $I_{D2N}$ in den Gleichstromkreisen GK1 und GK2 in nahezu gleicher Weise eine transiente Kurzschlußstromspitze. Im Vergleich zur Stromspitze im Strom $I_{D1N}$ in FIG 5 sind die Stromspitzen gemäß der FIG 6 erheblich niedriger und annähernd gleich groß. Da nun die Auswirkung des Fehlers in einem der Teilumrichter aufgrund der magnetischen Kopplung nahezu gleichmäßig auf die beiden Teilumrichter verteilt wird, ist nicht damit zu rechnen, daß die Gleichstromregler $Ri_1$ und $Ri_2$ ein sehr stark abweichendes Überschwingverhalten während und nach der Fehlerdauer zeigen. So ist es nicht notwendig, die Gleichstromregler während der Fehlerdauer zu sperren. Wie aus der FIG 6 zu entnehmen ist, nehmen die Stromregler die Stellsignale $U_{A1}$ und $U_{A2}$ im Bereich zwischen Fehlereintritt im Zeitpunkt $t_1$ und dem Fehlerende im Zeitpunkt $t_3$ nahezu gleichmäßig bis zur Wechselrichter-Trittgrenze zurück. Die vorsteuernde Wirkung der erfindungsgemäßen Verkopplung ist besonders deutlich dadurch zu erkennen, daß eine Vorzeichenumkehr des Stellsignals $U_{A2}$ des ungestörten Teilumrichters UR1 im Zeitpunkt $t_6$ geringfügig vor der entsprechenden Vorzeichenumkehr des zum gestörten Teilumrichter $UR_2$ gehörigen Stellsignals $U_{A1}$ im Zeitpunkt $t_7$ stattfindet. Nach Fehlerende im Zeitpunkt $t_3$ und insbesondere nach Wiederaufnahme der normalen Kommutierungsfolge im Zeitpunkt $t_4$ schwingen die Gleichstromregler ohne nennenswerte Abweichung der Stellsignale $U_{A1}$ und $U_{A2}$ auf die stationären Werte ein.

Werden trotz der magnetischen Kopplung der Spulen in den Gleichstromkreisen der Teilumrichter die Gleichstromregler nach Fehlereintritt gesperrt, so kann eine weiter verbesserte Harmonisierung des Betriebsverhaltens der parallelen Teilumrichter während der Fehlerdauer erreicht werden. Ein derartiger Fall ist in der FIG 7 dargestellt. Hierbei werden nach Eintritt des Fehlers im Zeitpunkt $t_1$ die Regler im Zeitpunkt $t_2$ gesperrt. Man erkennt, daß als Folge davon nun in Vergleich zu FIG 6 erheblich kleinere transiente Kurzschlußstromkuppen in den Strömen $I_{D1N}$ und $I_{D2N}$ auftreten und dementsprechend schnell abklingen. Das Gesamtsystem ist durch den stark gedämpften und über die Kopplung nahezu gleichmäßig auf beide Teilsysteme verteilten Kurzschlußstrom so wenig gestört, daß die Gleichströme $I_{D1N}$ und $I_{D2N}$ nach Aufheben der Regelsperre im Zeitpunkt $t_3$ und nach Beginn der normalen Kommutierungsfolge im Zeitpunkt $t_4$ sehr schnell ihre ursprünglichen Größe etwa im Zeitpunkt $t_5$ wieder erreicht haben.

**Patentansprüche**

1. Umrichter aus mindestens zwei parallelen, galvanisch getrennten Teilumrichtern mit Gleichstromzwischenkreis und Drosseln im Zwischenkreis, wobei

   a) jeder Teilumrichter (UR1,UR2) ein separates Ein- oder Mehrphasensystem bildet und diese parallel so auf eine Last (M) arbeiten, daß jedes der Ein- oder Mehrphasensysteme in der Last ein Drehfeld hervorruft,

   b) die Drosseln (L11,L21 bzw. L12,L22) der parallelen Teilumrichter (UR1,UR2) magnetisch miteinander verkoppelt sind,

   **dadurch gekennzeichnet,** daß

   c) die Drosseln (L11,L21 bzw. L12,L22) der parallelen Teilumrichter (UR1,UR2) mittels der magnetischen Kopplung (MK1 bzw. MK2) so miteinander verbunden sind, daß eine Änderung des Gleichstromes ($I_{D1P}$ bzw. $I_{D1N}$) im Gleichstromkreis (GK1) eines Teilumrichters (UR1) eine dementsprechende Änderung der Gleichströme ($I_{D2P}$ bzw. $I_{D2N}$) in den Gleichstromkreisen (GK2) der parallelen Teilumrichter (UR2) im Sinne einer Vorsteuerung hervorruft (Fig.1,2 bzw. 4).

2. Vorrichtung nach Anspruch 1, **dadurch gekennzeichnet,** daß bei einem Umrichter (UR) aus einer geraden Anzahl von auf eine Last (M) arbeitenden parallelen Teilumrichtern (UR1, UR2) die magnetische Kopplung der Drosseln (L11,L21 bzw.L12,L22) so vorgenommen wird, daß sich die von den Drosseln hervorgerufenen magnetischen Gleichflüsse in der Kopplung (MK1 bzw. MK2) kompensieren.

**3.** Vorrichtung nach einem der vorangegangenen Ansprüche, **dadurch gekennzeichnet,** daß die parallelen Teilumrichter (UR1,UR2) so phasenversetzt zueinander getaktet werden, daß die Pulszahl des gesamten Umrichters größer ist als die Pulszahl der einzelnen Teilumrichter.

**4.** Vorrichtung nach Anspruch 3, **dadurch gekennzeichnet,** daß die parallelen Teilumrichter getrennt an die Last angeschlossen sind und innerhalb der Last ein Wechsel- bzw. Drehstromsystem mittels größerer Pulszahl entsteht.

**5.** Vorrichtung nach einem der vorangegangenen Ansprüche, **gekennzeichnet** durch einen Umrichter (UR) aus zwei sechspulsigen Teilumrichtern mit je einem Gleichstromzwischenkreis zwischen dem netz- und lastseitigen Stromrichter eines jeden Teilumrichters.

**6.** Vorrichtung nach einem der vorangegangenen Ansprüche, **gekennzeichnet** durch eine rotierende elektrische Maschine als Last (M), insbesondere eine Synchronmaschine.

**Claims**

**1.** A converter composed of at least two parallel, galvanically separated partial converters with a DC-link reactor and chokes in the intermediate circuit, wherein
a) each partial converter (UR1, UR2) forms a separate single-phase or multi-phase system and these work parallel on a load (M) such that each of the single-phase and multi-phase systems causes a rotating field in the load,
b) the chokes (L11, L21 or L12, L22) of the parallel partial converters (UR1, UR2) are coupled magnetically together,
characterised in that
c) the chokes (L11, L21 or L12, L22) of the parallel partial converters (UR1, UR2) are connected to each other by means of the magnetic coupling (MK1 or MK2) such that an alteration of the direct current ($I_{D1P}$ or $I_{D1N}$) in the direct current circuit (GK1) of a partial converter (UR1) causes a corresponding alteration of the direct currents ($I_{D2P}$ or $I_{D2N}$) in the direct current circuits (GK2) of the parallel partial converters (UR2) for the purpose of a pre-control (Figures 1,2 or 4).

**2.** A device according to claim 1, characterised in that in a converter (UR), from an even number of parallel partial converters (UR1, UR2) working on one load (M), the magnetic coupling of the chokes (L11, L21 or L12, L22) is undertaken so that the magnetic unidirectional flux in the coupling (MK1 or MK2) caused by the throttles are corrected.

**3.** A device according to one of the preceding claims, characterised in that the parallel partial converters (UR1, UR2) are clocked phase-shifted relative to each other, so that the pulse number of the whole converter is greater than the pulse number of the individual partial converters.

**4.** A device according to claim 3, characterised in that the parallel partial converters are connected separately to the load and within the load an alternating or three-phase current system is produced by means of a larger pulse number.

**5.** A device according to one of the preceding claims, characterised by a converter (UR) of two six-pulse partial converters with in each case a DC-link reactor between the network side and load side current converter of each partial converter.

**6.** A device according to one of the preceding claims, characterised by a rotating electric machine as load (M), in particular a synchronous machine.

**Revendications**

**1.** Mutateur constitué d'au moins deux mutateurs partiels parallèles, séparés galvaniquement et comportant un circuit intermédiaire à courant continu et des bobines situées dans le circuit intermédiaire, et du type dans lequel
a) chaque mutateur partiel (UR1, UR2) forme un système monophasé ou polyphasé distinct et ces systèmes agissent en parallèle sur une charge (M), de sorte que chacun des systèmes monophasés ou polyphasés fait apparaître un champ tournant dans la charge,
b) les bobines (L11, L21 ou L12, L22) des mutateurs partiels parallèles (UR1, UR2) sont couplées entre elles magnétiquement,
caractérisé par le fait que
c) les bobines (L11, L21 ou L12, L22) des mutateurs partiels parallèles (UR1, UR2) sont reliées entre elles au moyen du couplage magnétique (MK1 ou MK2), de sorte qu'une modification du courant continu ($I_{D1P}$ ou $I_{D1N}$) dans le circuit à courant continu (GK1) d'un mutateur partiel (UR1) provoque une modification correspondante des courants continus ($I_{D2P}$ ou $I_{D2N}$) dans les circuits à courant continu (GK2) des mutateurs partiels parallèles (UR2) en vue d'une commande pilote (figure 1, 2 ou 4).

2. Dispositif suivant la revendication 1, caractérisé par le fait que, dans le cas d'un mutateur (UR) constitué d'un nombre pair de mutateurs partiels parallèles (UR1, UR2) travaillant sur une charge (M), le couplage magnétique des bobines (L11, L21 ou L12, L22) est effectué de telle sorte que les flux magnétiques continus, qui sont provoqués par les bobines, se compensent dans le couplage (MK1 ou MK2).

3. Dispositif suivant l'une des revendications précédentes, caractérisé par le fait que les mutateurs partiels parallèles (UR1, UR2) sont commandés de façon cadencée avec un déphasage réciproque, de sorte que le nombre d'impulsions de l'ensemble du mutateur est supérieur au nombre d'impulsions des différents mutateurs partiels.

4. Dispositif suivant la revendication 3, caractérisé par te fait que les mutateurs partiels parallèles sont reliés séparément à la charge et qu'un système à courant alternatif ou à courant triphasé est formé, à l'intérieur de ta charge, au moyen d'un plus grand nombre d'impulsions.

5. Dispositif suivant l'une des revendications précédentes, caractérisé par un mutateur (UR) constitué de deux mutateurs partiels à six impulsions comportant chacun un circuit intermédiaire à courant continu monté entre le redresseur situé côté secteur et te redresseur situé côté charge de chacun des mutateurs partiels.

6. Dispositif suivant l'une des revendications précédentes, caractérisé par une machine électrique tournante en tant que charge (M), notamment une machine synchrone.

**FIG 1**

FIG 2

FIG 3

FIG 4

FIG 5

FIG 6

FIG 7